# EUROPÄISCHE PATENTANMELDUNG

(11) **EP 3 182 026 A1**
(43) Veröffentlichungstag der Anmeldung: **21.06.2017**
(21) Anmeldenummer: 16193694.3
(22) Anmeldetag: 13.10.2016
(51) Int. Cl.: F24F 5/00

(54) **ZULUFTANLAGE MIT KÜHLVORRICHTUNG**

(30) Priorität: 17.12.2015 DE 102015016330
(71) Anmelder: Eisenmann SE, 71032 Böblingen (DE)
(72) Erfinder: Itzrodt, Julius, 72762 Reutlingen (DE)
(74) Vertreter: Ostertag & Partner Patentanwälte

(57) **Zusammenfassung**

Die Erfindung betrifft eine Vorrichtung zur Konditionierung eines Luftstroms für eine industrielle Anlage, mit einem Kühlmediumkreislauf, eine in den Kühlmediumkreislauf eingebundene Kühlvorrichtung mit einem Kühlmedium-Einlass und einem Kühlmedium-Auslass, zumindest einem in den Kühlmediumkreislauf eingebundenen Verbraucher mit einem Kühlmedium-Einlass und einem Kühlmedium-Auslass, einer Zuluftvorrichtung zur Konditionierung von Luft für die industrielle Anlage, wobei die Zuluftvorrichtung einen Luft-Kühlmedium-Wärmetauscher, einen Lufteinlass zur Zuführung von Luft außerhalb der industriellen Anlage zu dem Luft-Kühlmedium-Wärmetauscher, einen Luftauslass zur Zuführung von Luft von dem Luft-Kühlmedium-Wärmetauscher zu der industriellen Anlage, einen Kühlmedium-Einlass und einen Kühlmedium-Auslass aufweist.

Erfindungsgemäß ist vorgesehen, dass der Kühlmedium-Auslass des Verbrauchers mit dem Kühlmittel-Einlass der Zuluftvorrichtung verbindbar ist.

Außerdem betrifft die Erfindung ein Verfahren zur Steuerung einer Vorrichtung zurKonditionierung eines Luftstroms für eine industrielle Anlage.

## Beschreibung

### 1. Gebiet der Erfindung

Die Erfindung betrifft eine Vorrichtung zur Konditionierung eines Luftstroms für eine industrielle Anlage, mit einem Kühlmediumkreislauf, einem in den Kühlmediumkreislauf eingebundenen Kühlvorrichtung mit einem Kühlmedium-Einlass und einem Kühlmedium-Auslass, zumindest einem in den Kühlmediumkreislauf eingebundenen Verbraucher mit einem Kühlmedium-Einlass und einem Kühlmedium-Auslass, einer Zuluftvorrichtung zur Konditionierung von Luft für die industrielle Anlage, wobei die Zuluftvorrichtung einen Luft-Kühlmedium-Wärmetauscher, einen Lufteinlass zur Zuführung von Luft von außerhalb des Behandlungsraums zu dem Luft-Kühlmedium-Wärmetauscher, einen Luftauslass zur Zuführung von Luft von dem Luft-Kühlmedium-Wärmetauscher in die industrielle Anlage, einen Kühlmedium-Einlass und eine Kühlmedium-Auslass aufweist.

Außerdem betrifft die Erfindung ein Verfahren zur Steuerung einer Vorrichtung zur Konditionierung eines Luftstroms für eine industrielle Anlage.

### 2. Beschreibung des Standes der Technik

Eine derartige Kombination aus einer Kühlvorrichtung und einer Zuluftvorrichtung findet oftmals Anwendung in industriellen Anlagen zur Behandlung von Gegenständen in einem Behandlungsraum. Bei solchen industriellen Anlagen kann es sich beispielsweise um einen Trockner, eine Lagerhalle, oder eine Beschichtungsanlage für Fahrzeugkarosserien oder Fahrzeugbauteile handeln. Dort wird oftmals eine Zuluftvorrichtung eingesetzt, die beispielsweise einzelne abgeschlossene Behandlungsräume oder auch die gesamte Anlage mit konditionierter Außenluft versorgt. Die Konditionierung betrifft in diesem Fall vorrangig eine Temperierung der zuzuführenden Luft, aber auch eine Befeuchtung der Luft. Entsprechend muss, je nach Standort der Anlage, beispielsweise Außenluft mit einer hohen Temperatur gekühlt und mit einer niedrigen Temperatur erwärmt werden. In den gemäßigten Breitengraden bedeutet dies, dass sich die Zuluftvorrichtung im Sommer in einem Kühlbetrieb und im Winter in einem Heizbetrieb befindet.

Beide Vorgänge - Kühlen und Heizen - sind mit einem entsprechenden Energieverbrauch verbunden. Je nach Ausgestaltung der Anlage kann beispielsweise die Kühlvorrichtung elektrische Energie und eine entsprechende Heizvorrichtung beispielsweise Gas verbrauchen.

Zunehmend finden bei der Auslegung solcher Anlagen nicht nur die einmaligen Anschaffungskosten, sondern auch der Gesamtenergieverbrauch einer solchen Anlage Berücksichtigung. Aber auch bei bestehenden Anlagen besteht das Bedürfnis, den Gesamtenergieverbrauch über ein Betriebsjahr hinweg zu minimieren.

Es ist somit eine Aufgabe der Erfindung, eine Vorrichtung der eingangs genannten Art sowie ein entsprechendes Verfahren anzugeben, die eine Senkung der Investitionskosten und/oder des mittleren Gesamtenergieverbrauchs ermöglichen.

### ZUSAMMENFASSUNG DER ERFINDUNG

Diese Aufgabe wird durch eine Vorrichtung gemäß dem unabhängigen Anspruch 1 gelöst.

Die erfindungsgemäße Vorrichtung zur Konditionierung eines Luftstroms für eine industrielle Anlage weist einen Kühlmediumkreislauf, eine in den Kühlmediumkreislauf eingebundene Kühlvorrichtung, beispielsweise ein Kühlaggregat, mit einem Kühlmedium-Einlass und einem Kühlmedium-Auslass, zumindest einen in den Kühlmediumkreislauf eingebundenen Verbraucher mit einem Kühlmedium-Einlass und einem Kühlmedium-Auslass auf.

Unter einer industriellen Anlage wird vorliegend ein mit einem konditionierten, vorrangig temperierten, Luftstrom zu versorgender Bereich einer industriellen Anlage wie beispielsweise eine Halle, eine Spritzkabine oder ein Trockner verstanden. Dabei kann es sich um einen abgeschlossenen oder abschließbaren Raum, einen Raum mit Schleusen, einen Raum mit einem konstanten oder intermittierenden Luftstrom handeln. Der Bereich kann auch nur bedarfsweise mit dem Luftstrom zu versorgen sein.

Unter einem Verbraucher soll vorliegend eine Einrichtung verstanden werden, die das von der Kühlvorrichtung abgekühlte Kühlmedium unter Erwärmung desselben nützt - also gewissermaßen energetisch verbraucht. Dabei kann es sich beispielsweise um einzelne Geräte der Anlage, eine Gruppe von Geräten der Anlage, um einen einzelnen Wärmeübertrager oder auch um weitere zu konditionierende Bereiche oder Räume einer industriellen Anlage wie etwa Hallen, Spritzkabinen oder Ähnliches handeln.

Mehrere Verbraucher können parallel oder seriell geschaltet sein und gegebenenfalls auch als ein Verbraucher angesehen werden.

Des Weiteren weist die Anlage eine Zuluftvorrichtung zur Konditionierung von Luft für eine industrielle Anlage auf. Die Zuluftvorrichtung weist einen Luft-Kühlmedium-Wärmetauscher, eine Luftführung mit einem Lufteinlass zur Zuführung von Luft außerhalb der industriellen Anlage, also beispielsweise Außenluft, zu dem Luft-Kühlmedium-Wärmetauscher und einen Luftauslass zur Zuführung von Luft von dem Luft-Kühlmedium-Wärmetauscher zu der industriellen Anlage sowie einen Kühlmedium-Einlass und einen Kühlmedium-Auslass auf.

Erfindungsgemäß ist vorgesehen, dass der Kühlmedium-Auslass des Verbrauchers mit dem Kühlmedium-Einlass der Zuluftvorrichtung verbindbar ist. Es kann also unter bestimmten Voraussetzungen das von dem Verbraucher verbrauchte - also erwärmte - Kühlmedium der Zuluftvorrichtung zugeführt werden. In der Zuluftvorrichtung kann in dem Luft-Kühlmedium-Wärmetauscher ein Wärmeübertrag von dem erwärmten Kühlmedium auf den der industriellen Anlage zuzuführenden Luftstrom erfolgen. Hat der Verbraucher dem Kühlmedium eine ausreichende Wärmeenergie übertragen, kann diese mittels der Zuluftvorrichtung zur Erwärmung des der industriellen Anlage zuzuführenden Luftstroms verwendet werden. Dies kann zu einer Einsparung der für die Erwärmung der Luft bereitzustellenden Wärmeenergie führen, da gewissermaßen Abwärme des Verbrauchers für die Erwärmung der Luft verwendet werden kann.

Gleichzeitig findet durch die Abgabe von Wärmeenergie von dem Kühlmedium auf den Luftstrom eine Abkühlung des die Zuluftvorrichtung durchströmenden Kühlmediums statt. Dies verringert die von der Kühlvorrichtung aufzubringende Kühlleistung an dem Kühlmedium und stellt eine weitere Energieeinsparung dar.

Bei einer vorteilhaften Ausführungsform kann vorgesehen sein, dass die Zuluftvorrichtung eine Befeuchtungseinrichtung aufweist. Mit einer der Erwärmung vorausgehenden Befeuchtung der Zuluft kann durch ein Verdunsten der zugeführten Feuchtigkeit das Kühlmedium adiabatisch abgekühlt und somit die von der Kühlvorrichtung aufzubringende Kühlleistung verringert werden.

Eine Ausführungsform der Anlage sieht vor, dass die Kühlvorrichtung für einen Betrieb ohne Freikühleinrichtung ausgelegt ist. Unter einer Freikühleinrichtung wird vorliegend eine Einrichtung verstanden, bei der das Kühlmedium durch Luft nach dem Konvektionsprinzip gekühlt wird. Eine Freikühleinrichtung steht üblicherweise außerhalb eines Gebäudes. Die durch die Freikühleinrichtung geführte Luft besteht im Wesentlichen aus Außenluft und weist entsprechend eine Außenlufttemperatur auf. Durch eine Freikühleinrichtung kann die von der Kühlvorrichtung aufzubringende Kühlleistung verringert werden, indem das Kühlmedium durch die Freikühleinrichtung vorgekühlt wird. Aufgrund der Verbindbarkeit des Verbraucher-Kühlmedium-Auslasses mit dem Kühlmedium-Einlass der Zuluftvorrichtung kann die Zuluftvorrichtung die Funktion einer Freikühleinrichtung übernehmen, die somit obsolet sein oder entsprechend kleiner dimensioniert werden kann..

Eine besonders bevorzugte Ausführungsform der Anlage weist eine Steuerung auf, die dazu ausgelegt ist, die Verbindung zwischen dem Kühlmedium-Auslass des Verbrauchers und dem Kühlmedium-Einlass der Zuluftvorrichtung herzustellen, wenn die Temperatur der über den Lufteinlass der Zuluftvorrichtung zugeführten Luft unterhalb der Temperatur des Kühlmediums an dem Kühlmedium-Einlass der Zuluftvorrichtung liegt. Sobald also eine nennenswerte Temperaturdifferenz, wie beispielsweise 1,5 °C, zwischen der über den Lufteinlass der Zuluftvorrichtung zugeführten Luft - also beispielsweise der Außenluft - und der Kühlmediumtemperatur stromabwärts des Verbrauchers besteht, kann das Kühlmedium mittels der Außenluft gekühlt bzw. der der industriellen Anlage zuzuführende Luftstrom erwärmt werden.

Weitere Ausgestaltungen der Erfindung sind in den abhängigen Ansprüchen angegeben.

Die Aufgabe wird außerdem durch ein Verfahren zur Steuerung einer Vorrichtung zur Konditionierung eines Luftstroms für eine industrielle Anlage gelöst. Die Vorrichtung umfasst einen Kühlmedium Kreislauf mit einer Kühlvorrichtung, zumindest einen in den Kühlmedium-Kreislauf eingebundenen Verbraucher und eine in den Kühlmedium-Kreislauf eingebundene Zuluftvorrichtung zur Konditionierung von Außenluft für die industrielle Anlage. Das Verfahren umfasst die Schritte: Ermitteln der Temperatur der Außenluft und Erwärmen der Außenluft in der Zuluftvorrichtung mittels des Kühlmediums stromabwärts des Verbrauchers, wenn die Temperatur der Außenluft eine Schwellentemperatur unterschreitet. Sobald also die Temperatur der Außenluft niedrig genug ist, wird diese mittels des Kühlmediums erwärmt bzw. das Kühlmedium wird durch die Außenluft abgekühlt. Somit ergeben sich die bereits oben erläuterten Vorteile einer Energieeinsparung bei der Erwärmung der Außenluft bzw. dem notwendigen Abkühlen des Kühlmediums.

Eine Weiterbildung des Verfahrens sieht vor, dass das Verfahren zusätzlich den Schritt des Ermittelns der Temperatur des Kühlmediums stromabwärts des Verbrauchers umfasst. Die Temperatur des Kühlmediums stromabwärts des Verbrauchers stellt somit die Schwellentemperatur dar. Sobald also die Temperatur der Außenluft unter die Temperatur des Kühlmediums stromabwärts des Verbrauchers gefallen ist oder eine genügend große Temperaturdifferenz zwischen den beiden Temperaturen herrscht, kann die Außenluft mittels des Kühlmediums erwärmt bzw. das Kühlmedium mittels der Außenluft gekühlt werden.

Bei einer vorteilhaften Weiterbildung des Verfahrens ist vorgesehen, dass die Außenluft vordem Erwärmen befeuchtet wird.

Bei einer besonders bevorzugten Ausführungsform des Verfahrens findet durch das Erwärmen der Außenluft ein Abkühlen des Kühlmediums statt und das abgekühlte Kühlmedium wird einem weiteren Verbraucher zugeführt. Es kann somit das durch die Zuluftvorrichtung abgekühlte Kühlmedium direkt einem weiteren Verbraucher wie beispielsweise einer Kühlzone oder einer Spritzkabine zugeführt werden.

Weitere Ausgestaltungen des Verfahrens sind in den abhängigen Verfahrensansprüchen angegeben.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Darstellung einer erfindungsgemäßen Vorrichtung zu Konditionierung eines Luftstroms für eine industrielle Anlage;
- Figur 2: einen ersten Schaltzustand der Vorrichtung der Figur 1; und
- Figur 3: einen zweiten Schaltzustand der Vorrichtung der Figur 1.

### BESCHREIBUNG BEVORZUGTER AUSFÜHRUNGSBEISPIELE

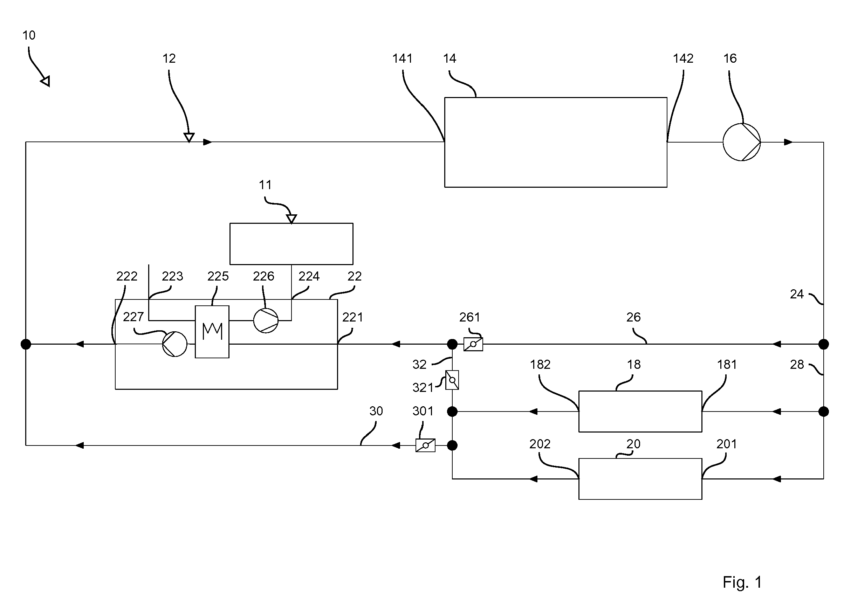

Figur 1 zeigt eine schematische Darstellung einer Vorrichtung 10 zur Konditionierung eines Luftstroms für eine industrielle Anlage. Die industrielle Anlage kann beispielsweise einen Behandlungsraum 11 darstellen, der lediglich schematisch dargestellt ist und beispielsweise ein Trockenraum, eine Kühlzone, eine Spritzkabine oder Ähnliches sein kann oder auch aus mehreren Behandlungsräumen aufgebaut sein kann.

Die Vorrichtung 10 weist einen Kühlmediumkreislauf 12 auf, dessen Strömungsrichtung durch Pfeile angedeutet ist. Als Kühlmedium wird vorliegend Wasser verwendet. Es können selbstverständlich auch andere Kühlmedien zum Einsatz kommen.

In den Kühlmediumkreislauf 12 ist eine Kühlvorrichtung 14, beispielsweise ein Kühlaggregat eingebunden. Die Kühlvorrichtung 14 kann beispielsweise als selbständige Einheit mit einem eigenen Kältekreislauf, umfassend beispielsweise Kondensator, Verdampfer, Kompressor und Expansionsventil, ausgestattet sein. Die Kühlvorrichtung 14 umfasst einen Kühlmedium-Einlass 141 und einen Kühlmedium-Auslass 142. Die Kühlvorrichtung 14 ist dazu ausgelegt, beispielsweise mittels elektrischer Energie das in den Kühlmedium-Einlass 141 einströmende Kühlmedium abzukühlen und in einem abgekühlten Zustand an dem Kühlmedium-Auslass 142 wieder abzugeben. Mögliche Temperaturen des Kühlmediums an dem Kühlmedium-Einlass 141 liegen in einem Bereich von 10-22 °C, typischerweise 12-16 °C, an dem Kühlmedium-Auslass in einem Bereich von 6-16 °C, typischerweise 6-10 °C, ein typisches Verhältnis aus Eingangstemperatur zu Ausgangstemperatur könnte beispielsweise bei 12/6, 15/7 oder bei 16/10 liegen.

Der Kühlmediumkreislauf 12 wird mittels einer Pumpe 16 aufrechterhalten.

Ebenfalls in den Kühlmediumkreislauf 12 eingebunden sind in der in Figur 1 gezeigten Ausführungsform ein erster Verbraucher 18 und ein zweiter Verbraucher 20. Der erste und der zweite Verbraucher 18, 20 weisen je einen Kühlmedium-Einlass 181, 201 und einen Kühlmedium-Auslass 182, 202 auf. Die beiden Verbraucher 18, 20 sind in der in Figur 1 gezeigten Ausführungsform parallel geschaltet. Selbstverständlich wäre auch eine serielle Schaltung der beiden Verbraucher 18, 20 sowie nur ein Verbraucher oder eine größere Anzahl an Verbrauchern denkbar.

Ebenfalls in den Kühlmediumkreislauf 12 eingebunden ist eine Zuluftvorrichtung 22 mit einem Kühlmedium-Einlass 221 und einem Kühlmedium-Auslass 222. Des Weiteren weist die Zuluftvorrichtung 22 einen Lufteinlass 223 und einen Luftauslass 224 auf. Über den Lufteinlass 223 kann die Zuluftvorrichtung 22 Luft von außerhalb des Behandlungsraums 11 mittels eines Gebläses 226 ansaugen und über den Luftauslass 224 beispielsweise an den Behandlungsraum 11 abgeben. Des Weiteren weist die Zuluftvorrichtung 22 einen Luft-Kühlmedium-Wärmetauscher 225 sowie optional eine Sekundärpumpe 227 für das Kühlmedium auf. Der Luft-Kühlmedium-Wärmetauscher 225 ist sowohl an den Kühlmediumkreislauf 12 als auch an die dem Behandlungsraum 11 Luft zuführende Luftführung angeschlossen und ermöglicht eine Wärmeübertragung von dem Kühlmedium an die Luft oder umgekehrt in Abhängigkeit von den Temperaturverhältnissen. Sowohl der Kühlmedium-Auslass 222 der Zuluftvorrichtung 22 als auch die Kühlmedium-Auslässe 182, 202 der Verbraucher 18, 20 sind mit dem Kühlmedium-Einlass 141 der Kühlvorrichtung 14 verbunden.

Um im Betrieb die Anlage 10 an die sich herrschenden Temperaturverhältnisse, insbesondere an die Temperatur der Luft am Lufteinlass 223 anzupassen, sind verschiedene Steuerventile und Leitungen für das Kühlmedium vorgesehen. Eine von der Pumpe 16 zu den Verbrauchern 18, 20 und der Zuluftvorrichtung 22 führende Leitung 24 teilt sich in eine parallel zu den Verbrauchern 18, 20 verlaufende Leitung 26 und eine die Verbraucher 18, 20 versorgende Leitung 28 auf. Der Ausgang der Verbraucher 18, 20 ist über eine Leitung 30, die parallel zu der Zuluftvorrichtung 22 verläuft, mit dem Kühlmedium-Einlass 141 verbunden. Gleichzeitig ist der Ausgang der Verbraucher 18, 20 über eine Leitung 32 mit dem Kühlmedium-Einlass 221 der Zuluftvorrichtung 22 verbunden.

In den Leitungen 26, 30, 32 sind jeweils Steuerventile angeordnet. Das in der Leitung 26 angeordnete Steuerventil 261 ermöglicht es im geöffneten Zustand, die Zuluftvorrichtung 22 parallel zu den Verbrauchern 18, 20 zu schalten und somit das von der Kühlvorrichtung 14 über die Leitung 24 herangeförderte Kühlmedium auf die Verbraucher 18, 20 und die Zuluftvorrichtung 22 zu verteilen. Im geschlossenen Zustand des Steuerventils 261 kann die Zuluftvorrichtung 22 ausschließlich über die Kühlmedium-Auslässe 182, 202 der Verbraucher 18, 20 und die Leitung 32 mit Kühlmedium versorgt werden.

Das in der Leitung 30 angeordnete Steuerventil 301 ermöglicht im geöffneten Zustand eine Abgabe des von den Verbrauchern 18, 20 verbrauchten Kühlmediums direkt an die Kühlvorrichtung 14. Im geschlossenen Zustand des Steuerventils 301 kann das verbrauchte Kühlmedium ausschließlich über die Leitung 32 an die Zuluftvorrichtung 22 gefördert werden.

Das in der Leitung 32 angeordnete Steuerventil 321 verhindert im geschlossenen Zustand einen Übergang von energetisch unverbrauchten Kühlmedium aus der Leitung 26 über die Leitungen 32, 30 direkt in die Kühlvorrichtung 14.

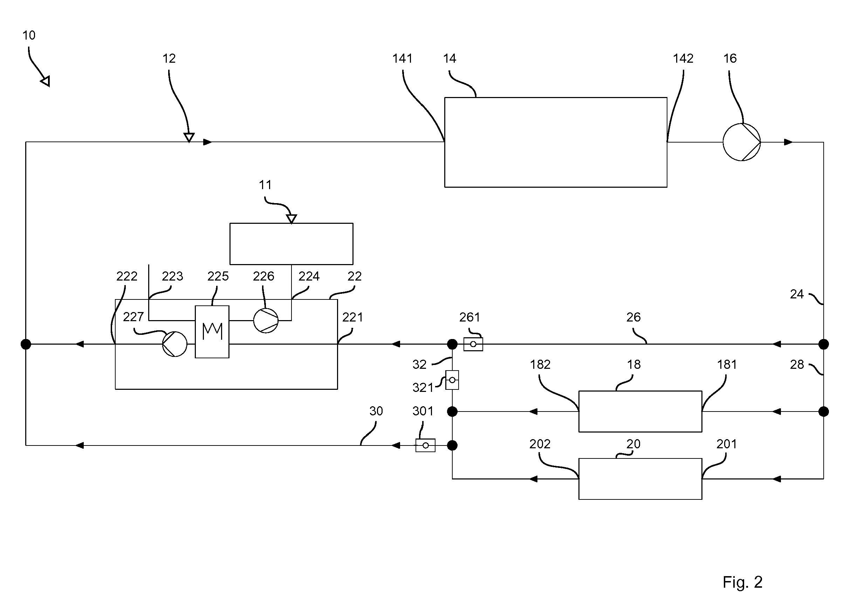

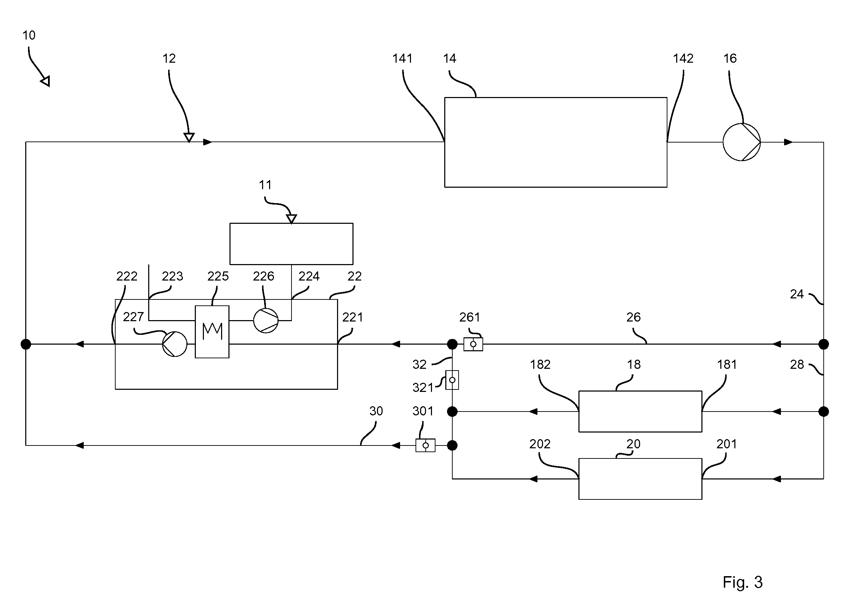

Anhand der Figuren 2 und 3, die verschiedene Schaltzustände der Anlage 10 der Figur 1 zeigen, werden nun verschiedene Betriebszustände der Anlage 10 erläutert.

Figur 2 zeigt einen ersten Schaltzustand der Anlage 10, bei dem die Steuerventile 261, 301 geöffnet und das Steuerventil 321 geschlossen sind. In diesem Schaltzustand sind die Verbraucher 18, 20 und die Zuluftvorrichtung 22 parallel geschaltet. Dies bedeutet, dass das von der Kühlvorrichtung 14 über die Leitung 24 herangeförderte Kühlmedium auf die Zuluftvorrichtung 22 und die Verbraucher 18, 20 aufgeteilt wird. Die Kühlmedium-Auslässe 222, 182, 202 der Zuluftvorrichtung 22 und der Verbraucher 18, 20 sind jeweils über entsprechende Leitungen mit dem Kühlmedium-Einlass 141 der Kühlvorrichtung 14 verbunden.

Dieser Schaltzustand wird dann eingenommen, wenn die über den Lufteinlass 223 der Zuluftvorrichtung 22 angesaugte Außenluft eine höhere Temperatur als das Kühlmedium an den Kühlmedium-Auslässen 182, 202 der Verbraucher 18, 20 besitzt. In diesem Fall ist es in der Regel angezeigt, die angesaugte Außenluft auf eine gewünschte Temperatur zu kühlen. Zu diesem Zweck erfolgt ein Wärmeübergang von dem Kühlmedium, das über den Kühlmedium-Einlass 221 der Zuluftvorrichtung 22 in den Luft-Kühlmedium-Wärmetauscher 225 strömt, auf die den Luft-Kühlmedium-Wärmetauscher 225 durchströmende Außenluft. In diesem Betriebszustand findet keine Rückgewinnung der von den Verbrauchern 18, 20 erzeugten Temperaturerhöhung des Kühlmediums statt. Diese Betriebsweise kann auch als Sommer-Betriebszustand bezeichnet werden.

Diese Betriebsweise wird in der Regel auch eingenommen, wenn die Temperatur der Außenluft zwar über der Rücklauftemperatur des Kühlmediums liegt, aber noch so niedrig ist, dass sie noch nicht gekühlt, sondern gegebenenfalls sogar noch zu erwärmen ist.

Figur 3 zeigt einen zweiten Schaltzustand der Anlage 10, bei dem die Steuerventile 261, 301 geschlossen und das Steuerventil 321 geöffnet ist. Die Verbraucher 18, 20 einerseits und die Zuluftvorrichtung 22 andererseits befinden sich nun in einer seriellen Konfiguration. Das über die Leitung 24 von der Pumpe 16 herangeförderte Kühlmedium durchströmt zunächst die Verbraucher 18, 20, wo es eine Temperaturerhöhung erfährt. Das die Kühlmedium-Auslässe 182, 202 verlassende Kühlmedium gelangt über die Leitung 32 zu dem Kühlmedium-Einlass 221 der Zuluftvorrichtung 22 und durchströmt dann den Luft-Kühlmedium-Wärmetauscher 225. Dort kann das erwärmte Kühlmedium Wärmeenergie an die Luft abgeben, die über den Lufteinlass 223 eingesaugt und beispielsweise an den Behandlungsraum 11 über den Luftauslass 224 abgegeben wird. Da sich bei einer seriellen Schaltung der Verbraucher 18, 20 einerseits und der Zuluftvorrichtung 22 andererseits der Druckabfall über das gesamte System hinweg erhöht, kann in diesem Fall die Sekundärpumpe 227 zugeschaltet oder mit einem erhöhten Volumenstrom oder/und Förderdruck arbeiten. Diese Kompensation ermöglicht einen gleichbleibenden effektiven Gesamtdruckabfall über Verbraucher und Zuluftvorrichtung.

Dieser Betriebszustand wird gewählt, wenn die Temperatur der Luft, die über den Lufteinlass 223 eingesaugt wird - also hier die Außenluft - unter der Temperatur des Kühlmediums an den Kühlmedium-Auslässen 182, 202 liegt. Das so abgekühlte Kühlmedium kann an andere Verbraucher der Anlage 10 geleitet werden, um dort beispielsweise in einer Kühlzone oder in einer Spritzkabine für die Prozesskühlung verwendet zu werden. Alternativ kann das abgekühlte Kühlmedium, wie in Figur 3 gezeigt, der Kühlvorrichtung 14 zugeleitet werden und so dessen Energieverbrauch verringern. Diese Betriebsweise kann auch als Winter-Betriebszustand bezeichnet werden.

Beträgt beispielsweise die Temperatur der Außenluft -9 °C und ist der Kühlmediumkreislauf 12 für eine Vorlauftemperatur von 10 °C in der Leitung 142 und eine Rücklauftemperatur von 16 °C in der Leitung 141 ausgelegt, beträgt die Temperatur der Luft nach dem Luft-Kühlmedium-Wärmetauscher 225 5 °C. Um die dem Behandlungsraum 11 zuzuführende Luft auf die geforderte Temperatur von 20 °C zu bringen, wird diese mittels einer zusätzlichen Heizeinrichtung auf 18 °C erwärmt, um nach dem Verdichten durch das Gebläse 226 mit 20 °C in den Behandlungsraum 11 eingeblasen zu werden. Bei einem typischen Luftdurchsatz von 86.000 m³/h kann dies beispielsweise 400 kW zurück gewonnene Kälteleistung am Luft-Kühlmedium-Wärmetauscher 225 und ca. 400 kW eingesparte Heizleistung an der Heizeinrichtung bedeuten. Die Heizleistung der Heizeinrichtung kann also entsprechend kleiner gewählt werden und es kann auf einen Freikühler verzichtet werden, was geringere Investitionskosten zur Folge hat.

Hierdurch verringert sich zum einen der Energieverbrauch der Kühlvorrichtung 14. Zum anderen muss weniger oder keine Energie zum Erwärmen der dem Behandlungsraum 11 zuzuführenden Luft aufgewendet werden. Dies macht einerseits eine zusätzliche Freikühlanlage, die ansonsten der Kühlvorrichtung 14 zugeordnet ist, obsolet und verringert damit die Investitionskosten in die Anlage 10. Andererseits verringert sich auch der jährliche Energieverbrauch der Gesamtanlage durch Einsparung von Energie für die Erwärmung der Außenluft. Gleichzeitig ist eine Umrüstung bestehender Anlagen mit vergleichsweise wenig Aufwand - im Wesentlichen eine Anbringung der Regelventile 261, 321, 301, gegebenenfalls einer Sekundärpumpe 227 sowie der zusätzlichen Leitung 32 - durchführbar.

Bei der Erstauslegung einer solchen Anlage 10 kann beispielsweise der Kühlmediumkreislauf insgesamt für höhere Temperaturen ausgelegt werden. Dies bewirkt stärkere Einsparungen, da der Betriebszustand "Winter" der Figur 3 zu einem größeren Anteil des Jahres genutzt werden kann. Des Weiteren kann es vorteilhaft sein, die Zuluftvorrichtung 22 in der Nähe der Kühlvorrichtung 14 anzuordnen, sodass der gesamte Rücklauf des Kühlmediumkreislaufs 12 mit der höchstmöglichen Temperatur von der Zuluftvorrichtung 22 genützt werden kann. Insgesamt ist der Einspareffekt umso größer, je niedriger die Jahresmitteltemperatur der Außenluft des Aufstellorts der Anlage 10 ist.

## Patentansprüche

1. Vorrichtung (10) zur Konditionierung eines Luftstroms für eine industrielle Anlage, mit
a) einem Kühlmediumkreislauf (12),
b) eine in den Kühlmediumkreislauf (12) eingebundene Kühlvorrichtung (14) mit einem Kühlmedium-Einlass (141) und einem Kühlmedium-Auslass (142),
c) zumindest einem in den Kühlmediumkreislauf (12) eingebundenen Verbraucher (18, 20) mit einem Kühlmedium-Einlass (181, 201) und einem Kühlmedium-Auslass (182, 202),
d) einer Zuluftvorrichtung (22) zur Konditionierung des Luftstroms, wobei die Zuluftvorrichtung (22)
- einen Luft-Kühlmedium-Wärmetauscher (225),
- einen Lufteinlass (223) zur Zuführung von Luft außerhalb der industriellen Anlage zu dem Luft-Kühlmedium-Wärmetauscher (225),
- einen Luftauslass (224) zur Zuführung von Luft von dem Luft-Kühlmedium-Wärmetauscher (225) zu der industriellen Anlage,
- einen Kühlmedium-Einlass (221) und
- einen Kühlmedium-Auslass (222) aufweist,
**dadurch gekennzeichnet, dass**
e) der Kühlmedium-Auslass (182, 202) des Verbrauchers (18, 20) mit dem Kühlmittel-Einlass (221) der Zuluftvorrichtung (22) verbindbar ist.

2. Vorrichtung nach Anspruch 1, wobei die Zuluftvorrichtung (22) eine Befeuchtungseinrichtung aufweist.

3. Vorrichtung nach einem der vorhergehenden Ansprüche, wobei die Kühlvorrichtung (14) für einen Betrieb ohne Freikühleinrichtung ausgelegt ist.

4. Vorrichtung nach einem der vorhergehenden Ansprüche, mit einer Steuerung, die dazu ausgelegt ist, die Verbindung zwischen dem Kühlmedium-Auslass (182, 202) des Verbrauchers (18, 20) und dem Kühlmittel-Einlass (221) der Zuluftvorrichtung (22) herzustellen, wenn die Temperatur der über den Lufteinlass (223) der Zuluftvorrichtung (22) zugeführten Luft unterhalb der Temperatur des Kühlmediums an dem Kühlmedium-Einlass (221) der Zuluftvorrichtung (22) liegt.

5. Verfahren zur Steuerung einer Vorrichtung (10) zur Konditionierung eines Luftstroms für eine industrielle Anlage, wobei die Vorrichtung einen Kühlmediumkreislauf (12) mit einer Kühlvorrichtung (14), zumindest einen in den Kühlmediumkreislauf (12) eingebundenen Verbraucher (18, 20) und eine in den Kühlmediumkreislauf (12) eingebundene Zuluftvorrichtung (22) zur Konditionierung von Außenluft für die industrielle Anlage aufweist, wobei das Verfahren die Schritte umfasst:
- Ermitteln der Temperatur der Außenluft; und
- Erwärmen der Außenluft in der Zuluftvorrichtung (22) mittels des Kühlmediums stromabwärts des Verbrauchers (18, 20), wenn die Temperatur der Außenluft eine Schwellentemperatur unterschreitet.

6. Verfahren nach Anspruch 5, mit dem Schritt:
- Ermitteln der Temperatur des Kühlmediums stromabwärts des Verbrauchers und
- wobei die Schwellentemperatur die Temperatur des Kühlmediums stromabwärts des Verbrauchers ist.

7. Verfahren nach einem der Ansprüche 5 bis 6, mit dem Schritt:
- Vergleichen der Außenlufttemperatur und der Kühlmediumtemperatur.

8. Verfahren nach einem der Ansprüche 5 bis 7, mit dem Schritt:
- Befeuchten der Außenluft vor dem Erwärmen der Außenluft.

9. Verfahren nach einem der Ansprüche 5 bis 8, wobei durch das Erwärmen der Außenluft ein Abkühlen des Kühlmediums stattfindet und das abgekühlte Kühlmedium einem weiteren Verbraucher zugeführt wird.
